# EUROPÄISCHE PATENTSCHRIFT

(11) **EP 4 317 949 B1**
(45) Veröffentlichungstag und Bekanntmachung des Hinweises auf die Patenterteilung: **02.07.2025**
(21) Anmeldenummer: 23187501.4
(22) Anmeldetag: 25.07.2023
(51) Int. Cl.: G01N 21/64, G02B 21/16

(54) **VERFAHREN UND LICHTMIKROSKOP ZUR LOKALISIERUNG EINZELNER EMITTER IN EINER PROBE**
METHOD AND LIGHT MICROSCOPE FOR LOCATING INDIVIDUAL EMITTERS IN A SAMPLE
PROCÉDÉ ET MICROSCOPE OPTIQUE POUR LOCALISER DES ÉMETTEURS INDIVIDUELS DANS UN ÉCHANTILLON

(30) Priorität: 04.08.2022 DE 102022119589
(43) Veröffentlichungstag der Anmeldung: 07.02.2024
(73) Patentinhaber: Abberior Instruments GmbH, 37077 Göttingen (DE)
(72) Erfinder: SCHMIDT, Roman, 37077 Göttingen (DE); SCHÖNLE, Andreas, 37085 Göttingen (DE)

(56) Entgegenhaltungen:
- WO-A1-2022/112155
- WO-A1-2022/152785
- US-A1- 2022 042 914

## Beschreibung

### Technisches Gebiet der Erfindung

Die Erfindung betrifft ein Verfahren und ein Lichtmikroskop zur Lokalisierung einzelner Emitter in einer Probe nach dem MINFLUX-Prinzip.

### Stand der Technik

Unter dem Begriff "MINFLUX-Mikroskopie" bzw. "MINFLUX-Verfahren" wird eine Familie von Lokalisierungs- und Trackingverfahren für einzelne lichtemittierende Emitter zusammengefasst, bei denen am Fokus in der Probe eine Lichtverteilung von Beleuchtungslicht, das Lichtemissionen des Emitters induziert oder moduliert, erzeugt wird, wobei die Lichtverteilung in zumindest einer Raumrichtung ein lokales Minimum aufweist, und bei denen die Position eines einzelnen Emitters durch Detektieren von Lichtemissionen des Emitters bestimmt wird, wobei ausgenutzt wird, dass von dem Emitter umso weniger Licht emittiert wird, je geringer der Abstand zwischen dem Emitter und dem Minimum der Lichtverteilung ist (MINFLUX-Prinzip). Aufgrund der letztgenannten Tatsache sind MINFLUX-Verfahren, insbesondere im Vergleich zu sogenannten PALM-/STORM-Lokalisierungsverfahren, besonders photoneneffizient. Zusätzlich ergibt sich bei bestimmten Ausführungen des Verfahrens auch der Vorteil, dass die zu lokalisierenden Emitter im Vergleich zu anderen Lokalisierungsmethoden mit relativ wenig Licht beaufschlagt werden und daher weniger gebleicht werden.

Bei den einzelnen Emittern handelt es sich insbesondere um Fluorophore und das Beleuchtungslicht ist insbesondere Anregungslicht, welches die Fluorophore anregt, woraufhin diese Fluoreszenzlicht aussenden. Die Lichtverteilung mit dem lokalen Minimum kann insbesondere 2D-donutförmig oder 3D-donutförmig sein.

Die Patentanmeldung DE 10 2013 114 860 A1 beschreibt insbesondere ein Lokalisationsverfahren, bei dem die Probe an Rasterpunkten mit dem lokalen Minimum einer Anregungslichtverteilung abgetastet wird, um einzelne Fluorophore zu lokalisieren.

Der Begriff "MINFLUX" wird zum ersten Mal in der Publikation "F. Balzarotti et al., "Nanometer resolution imaging and tracking of fluorescent molecules with minimal photon fluxes", Science 355 (6325), 606-612 (2017)" verwendet. Dort wird das oben beschriebene MINFLUX-Prinzip konkret umgesetzt, indem ein einzelner Fluorophor zunächst durch Abtasten mit einer ersten gaußförmigen Anregungslichtverteilung vorlokalisiert wird und anschließend eine zweite, donutförmige Anregungslichtverteilung an Punkten platziert wird, die ein symmetrisches Muster von Beleuchtungspositionen um die in der Vorlokalisierung geschätzte Position des Fluorophors bilden. Aus den für die einzelnen Beleuchtungspositionen registrierten Photonenzahlen wird dann mit einem *Maximum-Likelihood*-Schätzer die Position des Fluorophors auf wenige Nanometer genau bestimmt.

Weitere Varianten und Ausführungsformen einer MINFLUX-Lokalisierung sind in den Patentanmeldungen DE 10 2016 119 262 A1, DE 10 2016 119 263 A1 und DE 10 2016 119 264 A1 beschrieben.

Die Publikation "K. C. Gwosch et al., "MINFLUX nanoscopy delivers 3D multicolor nanometer resolution in cells", Nat. Methods, 17 (2), 217-224 (2020)" beschreibt iterative 2D- und 3D-MINFLUX-Lokalisierungsverfahren. Dabei wird die Probe in mehreren Iterationsschritten an Beleuchtungspositionen mit dem Minimum einer donutförmigen Anregungslichtverteilung beleuchtet, wobei die Beleuchtungspositionen ein um die im jeweils vorhergehenden Schritt geschätzte Position des Fluorophors zentriertes symmetrisches Beleuchtungsmuster bilden, und wobei die Beleuchtungspositionen in jedem Iterationsschritt enger um die aktuell geschätzte Position des Fluorophors platziert werden. Hierdurch lässt sich in wenigen Schritten eine sehr hohe Positionsgenauigkeit erreichen.

Eine weiteres iteratives MINFLUX-Lokalisations- und Tracking-Verfahren unter Verwendung eines abgewandelten Positionsschätzers und auf Basis eines kommerziellen Mikroskop-Aufbaus ist in "R. Schmidt et al., "MINFLUX nanometer-scale 3D imaging and microsecond-range tracking on a common fluorescence microscope", Nat. Commun. 12 (1), 1478 (2021)" beschrieben.

Das Licht, welches die Lichtemission der Partikel induziert oder moduliert, kann z.B. auch STED (*stimulated emission depletion*)-Licht sein. So beschreiben die Patentanmeldungen DE 10 2017 104 736 A1 und EP 3 372 989 A1 MINFLUX-artige Verfahren, die auf einer Überlagerung einer Anregungslichtverteilung mit lokalem Maximum mit einer STED-Lichtverteilung mit lokalem Minimum beruhen. Die Probe wird durch Verlagerung der STED-Verteilung mit dem STED-Minimum abgetastet und aus den gemessenen Werten der Fluoreszenzintensität bei verschiedenen Positionen der STED-Intensitätsverteilung wird die Position des Fluorophors bestimmt. Auch diese Verfahren gehören zu den "MINFLUX-Verfahren" im Sinne der vorliegenden Erfindung.

Die Patentanmeldung WO 2020/128106 A1 sowie die Publikation "L. A. Masullo et al., "Pulsed Interleaved MINFLUX", Nano Lett. 21 (1), 840-846 (2021)" beschreiben unter anderem Ausführungsformen von MINFLUX-Lokalisierungsverfahren, bei denen die Positionen, an denen die Probe mit dem Minimum der Anregungslichtverteilung beleuchtet wird, durch Anordnungen von Lichtleiterfasern fest vorgegeben sind, wobei das Anregungslicht durch einen Pulslaser erzeugt wird, und wobei einzelne Anregungslichtpulse zeitlich versetzt durch die verschiedenen Faserenden der Lichtleiterfasern ausgegeben werden.

In der Publikation "E. Slenders, G. Vicidomini, "ISM-FLUX: single-step MINFLUX with an array detector", bioRxiv, DOI: 10.1101/2022.04.19.488747 (2022)" ist ein MINFLUX-Verfahren beschrieben, bei dem das von einem einzelnen Fluorophor emittierte Licht mittels eines Array-Detektors positionsabhängig erfasst wird, um in einem einzigen Lokalisationsschritt nicht-iterativ, d.h. ohne Repositionierung des Beleuchtungsmusters und ohne Vorlokalisation die Position des Fluorophors zu bestimmen.

Eine Positionsbestimmung ohne Vorlokalisierung hat jedoch insbesondere den Nachteil, dass eine Fotoaktivierung notwendig ist, um einzelne lichtemittierende Fluorophore im Bildfeld zu erhalten. Dies beschränkt die Anwendbarkeit des Verfahrens, da nicht alle Fluorophore fotoaktivierbar sind.

In vielen Fällen ist nach wie vor eine Vorlokalisierung unerlässlich, um eine initiale Positionsschätzung zu erhalten, auf dessen Basis dann das MINFLUX-Verfahren durchgeführt wird.

Um eine möglich hohe Positionsgenauigkeit zu erreichen, muss bei der Vorlokalisierung und dem MINFLUX-Verfahren insgesamt ein für jeden Emitter begrenztes Photonenbudget möglichst effizient genutzt werden. Je nach konkreter Ausgestaltung der Vorlokalisierung können jedoch beträchtliche systematische Abweichungen zwischen der in der Vorlokalisierung ermittelten initialen Positionsschätzung und der mit dem MINFLUX-Verfahren bestimmten Position eines Emitters bestehen. Dies resultiert in einer suboptimalen Positionsgenauigkeit, da die MINFLUX-Lokalisierung aufgrund der systematisch falschen initialen Position mehr Photonen verbraucht als eigentlich notwendig.

In der WO 2022/152785 A1 ist ein iteratives 3D-MINFLUX-Verfahren beschrieben, bei dem laterale und axiale Lokalisationsschritte getrennt voneinander durchgeführt werden. Die bei einzelnen Lokalisationsschritten verwendeten Positionsschätzer können in bekannter Weise mit einem Korrekturterm modifiziert werden, um einen systematischen Fehler (Bias) des Schätzers bezüglich unterschiedlicher tatsächlicher Positionen des zu lokalisierenden Emitters zu korrigieren.

Die US 2022/042914 A1 offenbart ein Verfahren zur Hintergrundkorrektur bei einer MINFLUX-Lokalisierung einzelner Emitter. Ein Positionsschätzer auf Basis einer normierten Vektorsumme kann dabei durch den während einer live-Messung bestimmten Hintergrund korrigiert werden, indem der ermittelte Hintergrundwert vom Nenner der normierten Vektorsumme abgezogen wird.

Dadurch kann ein durch den Hintergrund verursachter systematischer Fehler (Bias) in Bezug auf einen Lokalisationsschritt reduziert werden.

Aus der WO 2022/112155 A1 ist ein Lokalisationsverfahren für einzelne Emitter bekannt, bei dem die Probe mit Anregungslicht unterschiedlicher Wellenlängen belichtet wird, Emitter unter Verwendung des Anregungslichts lokalisiert werden und ein Unterschied der Lokalisation zwischen den unterschiedlichen Wellenlängen ermittelt wird. Auf dieser Basis kann eine Ko-Registrierung von Lokalisationen bei den unterschiedlichen Wellenlängen durchgeführt werden.

### Aufgabe der Erfindung

Ausgehend von den oben beschriebenen Nachteilen des Standes der Technik besteht die Aufgabe der vorliegenden Erfindung darin, die Photoneneffizienz und/oder die Positionsgenauigkeit eines MINFLUX-Lokalisationsverfahrens für einzelne Emitter in einer Probe zu verbessern.

### Lösung

Diese Aufgabe wird durch den Gegenstand der unabhängigen Ansprüche 1, 14 und 15 gelöst. Vorteilhafte Ausführungsformen der Erfindung sind in den Unteransprüchen 2 bis 13 angegeben und werden im Folgenden beschrieben.

### Beschreibung der Erfindung

Ein erster Aspekt der Erfindung betrifft ein Verfahren zur Lokalisierung einzelner Emitter in einer Probe mit einem ersten Lokalisierungsschritt umfassend die Verfahrensschritte
- Beleuchten der Probe mit Beleuchtungslicht, wobei das Beleuchtungslicht Lichtemissionen eines Emitters induziert oder moduliert;
- Detektieren der Lichtemissionen des Emitters;
- Bestimmen der Lage des Emitters in der Probe aus den detektierten Lichtemissionen.

Das Verfahren umfasst weiterhin einen zweiten Lokalisierungsschritt mit einer gegenüber dem ersten Lokalisierungsschritt gesteigerten Genauigkeit, wobei der zweite Lokalisierungsschritt die Verfahrensschritte umfasst:
- Beleuchten des Emitters mit einer in mindestens einer Raumrichtung ein lokales Minimum aufweisenden Intensitätsverteilung des oder eines anderen Beleuchtungslichts an Beleuchtungspositionen, die um die in dem ersten Lokalisierungsschritt bestimmte Lage des Emitters angeordnet sind;
- Detektieren der Lichtemissionen des Emitters zu den Beleuchtungspositionen;
- Bestimmen der Lage des Emitters aus den zu den Beleuchtungspositionen detektierten Lichtemissionen.

Das Verfahren ist dadurch gekennzeichnet, dass die in dem ersten Lokalisierungsschritt bestimmte Lage des Emitters eine systematische Abweichung gegenüber der in dem zweiten Lokalisierungsschritt bestimmten Lage desselben Emitters aufweist, wobei die systematische Abweichung durch ein Auftreten von im Rahmen der Messgenauigkeit gleichen Abweichungen zwischen dem ersten Lokalisierungsschritt und dem zweiten Lokalisierungsschritt bei wiederholten Lokalisierungen ein- und desselben Emitters definiert ist, und dass zur Festlegung der Beleuchtungspositionen in dem zweiten Lokalisierungsschritt eine die systematische Abweichung kompensierende Lagekorrektur angewendet wird, um die in dem ersten Lokalisierungsschritt bestimmten Lage eines Emitters einer korrespondierenden Lage des Emitters (E) in dem zweiten Lokalisierungsschritt zuzuordnen.

Unter dem Begriff des *Emitters* ist jeweils die Einheit zu verstehen, deren Lage in der Probe mit dem Lokalisierungsverfahren bestimmt werden soll. Die Lichtemission kann dementsprechend unmittelbar durch den Emitter selbst erfolgen oder mittelbar durch an den Emitter gekoppelte Marker (z. B. kovalent oder nicht-kovalent an ein Protein gebundene Fluoreszenzmarker). Mit der Lichtemission ist dabei nicht nur die aktive Aussendung von Licht durch den Emitter bzw. die Marker im Sinne einer Lumineszenz gemeint, sondern auch eine durch (Raman- / Rayleigh- / Mie-)Streuung verursachte Lichtemission. Konkret handelt es sich bei dem Emitter bzw. den an den Emitter gekoppelten Markern insbesondere um Moleküle eines fluoreszierenden Farbstoffs, um fluoreszierende Nanopartikel (z. B. *Quantum Dots*) oder um lichtstreuende Nanopartikel wie Gold-Nanopartikel oder Gold-Nanorods.

Als *einzelne Emitter* werden hier Emitter bezeichnet, die mit optischen Mitteln trennbar bzw. auflösbar sind. Das kann insbesondere bedeuten, dass die Emitter einen räumlichen Abstand zueinander aufweisen, der oberhalb der optischen Beugungsgrenze der Lichtmikroskopie liegt. In diesem Sinne einzeln sind Emitter aber auch dann, wenn sie nacheinander registriert werden können, beispielsweise, indem ein erster Emitter zu einem Zeitpunkt registriert wird, zu dem ein benachbarter Emitter kein Licht emittiert, da er sich (im Fall von Fluorophoren) in einem Dunkelzustand befindet. Auf diese Weise können auch Emitter, die einen Abstand unterhalb der Beugungsgrenze haben, aber asynchron blinken, lichtmikroskopisch aufgelöst werden. Schließlich ist es auch möglich, Emitter, die einen Abstand unterhalb der Beugungsgrenze aufweisen, aber Licht unterschiedlicher Wellenlängen emittieren, durch spektrale Trennung des emittierten Lichts lichtmikroskopisch aufzulösen oder zwei Emitter mit unterschiedlichen Anregungsspektren mit unterschiedlichen Wellenlängen anzuregen, um die Emitter optisch zu trennen. Schließlich können Emitter, die eine unterschiedliche Emissionslebensdauer aufweisen, über die Messung der Lebensdauer (z. B. durch zeitaufgelöste Einzelphotonenzählung) voneinander unterschieden und somit getrennt detektiert werden. Sämtliche dieser Ausführungsbeispiele fallen unter den Begriff "einzelne Emitter".

Im ersten Lokalisierungsschritt wird die Lage eines oder mehrerer Emitter in der Probe zunächst mit geringer(er) Genauigkeit bestimmt, um einen Startwert für die (hoch-)genaue Lagebestimmung des Emitters bzw. der Emitter in dem zweiten Lokalisationsschritt zu erhalten. Dazu wird der Emitter mit Beleuchtungslicht beleuchtet, bei dem es sich insbesondere um Anregungslicht handelt, welches den / die Emitter zur Fluoreszenz anregt oder durch die Emitter gestreut wird, eine Lichtemission also *induziert.* Alternativ kann das Beleuchtungslicht die Lichtemission auch *modulieren,* insbesondere hemmen. Beispiele hierfür sind STED-Licht, welches den angeregten Zustand von Fluorophoren durch stimulierte Emission löscht, oder Schaltlicht, welches z. B. Fluorophore aus einem fluoreszenten Zustand in einen Dunkelzustand, etwa einen Triplett-Zustand, überführen kann. Beleuchtungslicht, das die Lichtemission moduliert, wird dabei insbesondere in Kombination mit Anregungslicht verwendet.

Zur Detektion der Lichtemission des Emitters kann wahlweise ein Punktdetektor (etwa eine Avalanche-Fotodiode, APD, ein Fotomultiplier oder ein Hybriddetektor) oder ein ortsauflösender Flächendetektor (z. B. eine Kamera oder ein APD-Array) verwendet werden. Aus der Lichtemission wird die Lage des Emitters bestimmt, wobei die Lagebestimmung aus der ortsaufgelösten Detektion der Lichtemission (z. B. aus einem Epifluoreszenzbild) oder zu mehreren Positionen des Beleuchtungslichts registrierten Lichtemissionen (z. B. aus einer konfokalen Bildaufnahme) erfolgen kann. Die Lage des Emitters kann jeweils z.B. durch Zentroidbestimmung oder Momentenbestimmung erfolgen.

Im zweiten Lokalisierungsschritt wird der Emitter durch ein Verfahren nach dem MINFLUX-Prinzip lokalisiert, d. h. der Emitter wird an mehreren, um die in dem ersten Lokalisierungsschritt bestimmte Lage des Emitters herum angeordneten Beleuchtungspositionen mit einer in mindestens einer Raumrichtung ein lokales Intensitätsminimum aufweisenden Intensitätsverteilung von Beleuchtungslicht beleuchtet. Der zweite Lokalisierungsschritt muss dabei nicht zwingend unmittelbar auf den ersten Beleuchtungsschritt folgen; optional können zwischen dem ersten und dem zweiten Lokalisierungsschritt weitere Lokalisierungsschritte erfolgen; maßgeblich für das erfindungsgemäße Verfahren ist lediglich das Vorhandensein eines ersten und eines zweiten Lokalisierungsschritts.

Gemäß einer Ausführungsform des Verfahrens werden die Beleuchtungspositionen an diskreten Positionen um den Emitter angeordnet. Diese Positionen können frei gewählt werden, wobei die Zahl der Beleuchtungspositionen auf ein Minimum reduziert werden kann. Die Positionen können alternativ auch regelmäßig, d. h. auf einem Raster angeordnet sein, wobei das Raster nur einen Nahbereich von bevorzugt höchstens 1 µm, weiter bevorzugt höchstens 500 nm und besonders bevorzugt von höchstens 100 nm um den Emitter abdeckt.

Gemäß einer weiteren Ausführungsform des Verfahrens werden die Beleuchtungspositionen nicht an diskreten Punkten um den Emitter herum angeordnet, sondern die Beleuchtung erfolgt kontinuierlich entlang einer Beleuchtungstrajektorie, die den Emitter einschließt. Dabei kann die Zuordnung der detektierten Lichtemissionen zu einer Beleuchtungsposition in ähnlicher Weise wie beim kontinuierlichen Scannen in der Rastermikroskopie z. B. durch Definieren entsprechender Zeitintervalle (sogenannter *dwell times*) und Zuweisen der Lichtemissionen zu einer mittleren Beleuchtungsposition während des entsprechenden Zeitintervalls erfolgen. Alternativ kann die Zuordnung von Lichtemission zu Beleuchtungsposition auch erfolgen, indem umgekehrt die aktuelle Beleuchtungsposition registriert wird, sobald ein Photon der Lichtemission detektiert wird.

Eine Abfolge von Beleuchtungspositionen kann wahlweise einmal oder mehrfach durchlaufen werden. Alternativ ist auch eine veränderliche oder sogar zufällige Abfolge der Beleuchtungspositionen möglich. Besonders vorteilhaft ist es, die Beleuchtungspositionen auf Basis einer Lokalisierung des Emitters, insbesondere iterativ, neu zu berechnen und sie sukzessive dichter um die (tatsächliche) Lage des Emitters anzuordnen.

Wie bereits das in dem ersten Lokalisierungsschritt verwendete Beleuchtungslicht kann auch das in dem zweiten Lokalisierungsschritt verwendete Beleuchtungslicht die Lichtemission des Emitters *induzieren* oder *modulieren,* insbesondere hemmen. Dabei kann das in dem zweiten Lokalisierungsschritt verwendete Beleuchtungslicht identisch mit dem in dem ersten Lokalisierungsschritt verwendete Beleuchtungslicht sein, dies ist allerdings nicht zwingend erforderlich. Beispielsweise kann die Wellenlänge des Beleuchtungslichts in beiden Lokalisierungsschritten identisch sein, aber zwischen unterschiedlichen Intensitätsverteilungen des Lichts umgeschaltet werden. Für eine Lokalisierung eines Emitters aus einem konfokalen Bild in dem ersten Lokalisierungsschritt und einer Lokalisierung des Emitters nach einem MINFLUX-Prinzip in dem zweiten Lokalisierungsschritt ist es beispielsweise erforderlich, von einer gaußförmigen Mode auf eine ein Intensitätsminimum aufweisende, donutförmige Mode zu wechseln. Ein derartiges Umschalten kann unter anderem mit einem programmierbaren Phasenmodulator (*Spatial Light Modulator,* SLM) realisiert werden.

Zur Bestimmung der Lage des Emitters in dem zweiten Lokalisierungsschritt werden die Lichtemissionen des Emitters zu den Beleuchtungspositionen detektiert, und aus den zu den Beleuchtungspositionen detektierten Lichtemissionen wird schließlich die Lage des Emitters bestimmt. Dafür werden insbesondere Positionsschätzer verwendet, wie sie z. B. aus dem Stand der Technik zum MINFLUX-Verfahren bekannt sind (siehe z. B. "F. Balzarotti et al., "Nanometer resolution imaging and tracking of fluorescent molecules with minimal photon fluxes", Science 355 (6325), 606-612 (2017)".

Das lokale Intensitätsminimum kann punktförmig, linienförmig oder als Fläche ausgebildet sein, idealerweise handelt es sich um eine Intensitätsnullstelle, -nulllinie bzw. -nullfläche. Bei der Intensitätsverteilung kann es sich konkret um einen 2D-Donut oder einen 3D-Donut (auch als *bottle beam* bezeichnet) handeln. Derartige Intensitätsverteilungen können beispielsweise durch Phasenmodulation des Beleuchtungslichts mit einer Phasenplatte oder einem sogenannten *Spatial Light Modulator* (SLM) erzeugt werden. Dem Fachmann sind entsprechende Methoden aus dem Stand der Technik zur STED- und MINFLUX-Mikroskopie bekannt.

Das Positionieren der Intensitätsverteilung des Beleuchtungslichts in der Probe kann durch Strahlverlagerung (z. B. elektrooptisch oder mittels eines galvanometrischen Scanners), Probenverlagerung (z. B. mittels eines mit einem piezoelektrischen Aktuator verfahrbaren Probenhalters) oder auch durch Ansteuerung bestimmter Punktlichtquellen wie Faserenden einer Lichtleiterfaser realisiert werden.

Bei der lichtmikroskopischen Lokalisierung einzelner, insbesondere fluoreszierender, Emitter ist der die Lokalisierungsgenauigkeit begrenzende Faktor in der Regel die limitierte Lichtemission eines Emitters bis zu seinem irreversiblen Ausbleichen. Eine besonders effiziente Lokalisierung in dem zweiten Lokalisierungsschritt, d. h. eine möglichst präzise Bestimmung der Lage des Emitters aus wenigen Beleuchtungspositionen und wenig emittiertem Licht, ist insbesondere dann möglich, wenn die Beleuchtungspositionen in sehr geringem Abstand zu der tatsächlichen Lage des Emitters angeordnet werden. Insofern wird ein maximaler Abstand der Beleuchtungspositionen von der Lage des Emitters von 100 nm, bevorzugt von 50 nm und besonders bevorzugt von 30 nm, angestrebt. Dabei ist andererseits jedoch sicherzustellen, dass sich der Emitter innerhalb des durch die konvexe Hülle der Beleuchtungspunkte begrenzten Bereichs befindet. Die Lokalisierung des Emitters in dem zweiten Lokalisierungsschritt profitiert nämlich nur dann von den verfahrensspezifischen Vorteilen des MINFLUX-Prinzips (insbesondere der hochgenauen Lokalisierung bei geringer Lichtemission des Emitters), wenn sich der Emitter innerhalb der an das Intensitätsminimum angrenzenden Intensitätsanstiegsbereiche, insbesondere nahe dem Intensitätsminimum, befindet. Wenn der Emitter außerhalb dieser Intensitätsanstiegsbereiche, d. h. außerhalb der das Intensitätsminimum umgebenden Intensitätsmaxima liegt, entfallen die MINFLUX-spezifischen Vorteile gegenüber stochastischen Lokalisierungsverfahren wie STORM- und PALM-Mikroskopie. Liegt der Emitter weit außerhalb der Intensitätsmaxima, kann aus den zu den Beleuchtungspositionen detektierten Lichtemissionen die Lage des Emitters überhaupt nicht mehr eindeutig bestimmt werden (begrenzter MINFLUX-Fangbereich).

Um eine dichte Anordnung der Beleuchtungspositionen unter Beachtung der genannten Randbedingungen in dem zweiten Lokalisierungsschritt zu ermöglichen, ist bereits in dem ersten Lokalisierungsschritt eine möglichst genaue Lokalisierung des Emitters anzustreben. Dabei besteht in der Praxis regelmäßig das Problem, dass eine systematische Abweichung zwischen der Lagebestimmung eines Emitters in dem ersten Lokalisierungsschritt und in dem zweiten Lokalisierungsschritt auftritt. Diese systematische Abweichung muss dabei nicht homogen über das Sichtfeld sein, sondern kann (und ist in den meisten Anwendungsfällen) ortsabhängig, d. h. von der Lage des Emitters im Sichtfeld abhängig. Unter einer systematischen Abweichung ist insofern nur zu verstehen, dass bei wiederholten Lokalisierungen ein- und desselben Emitters im Rahmen der Messgenauigkeit gleiche Abweichungen zwischen der ersten und der zweiten Lokalisierung auftreten. Ungeachtet dessen können die systematischen Abweichungen (langsamen) Veränderungen beispielsweise infolge von Drifteffekten unterliegen, so dass eine zeitliche Anpassung der Lagekorrektur erforderlich wird.

Um trotz einer systematischen Abweichung zwischen den beiden Lokalisierungsschritten eine Anordnung der Beleuchtungspositionen dicht um den Emitter zu ermöglichen, sieht das erfindungsgemäße Verfahren vor, die Beleuchtungspositionen für den zweiten Lokalisierungsschritt unter Anwendung einer Lagekorrektur festzulegen. Diese Lagekorrektur dient dazu, die in dem ersten Lokalisierungsschritt bestimmte Lage eines Emitters einer korrespondierenden Lage in dem zweiten Lokalisierungsschritt zuzuordnen, sie bildet also die Koordinaten des Emitters in dem Koordinatensystem der ersten Lokalisierung auf die entsprechenden Koordinaten desselben Emitters in dem Koordinatensystem der zweiten Lokalisierung ab. Die Lagekorrektur wird im Allgemeinen in zwei oder drei Raumrichtungen erfolgen, so dass für die Lagekorrektur Korrekturvektoren zu bestimmen sind. Sofern nur eine Raumrichtung von Interesse ist oder die systematische Abweichung aufgrund bestehender oder angenommener Symmetrien auf eine einzige Dimension reduziert werden kann, erfordert die Lagekorrektur lediglich skalare Korrekturwerte. Wenn im Folgenden von Korrekturwerten gesprochen wird, schließt dies Korrekturvektoren ausdrücklich mit ein.

Die für die Lagekorrektur verwendeten Korrekturwerte können vorab, d. h. vor der erstmaligen Lokalisierung eines Emitters bestimmt werden. Hierzu können Modellrechnungen bzw. Simulationen der optischen Strahlwege angestellt werden, um korrespondierende Punkte in dem ersten Lokalisierungsschritt und in dem zweiten Lokalisierungsschritt und entsprechende Korrekturwerte zu bestimmen. Da die Abbildungseigenschaften der optischen Elemente in den Strahlengängen oft nicht hinreichend genau bekannt sind und / oder Varianzen der optischen Elemente eines gegebenen Typs eine ausreichend genaue Modellierung nicht zulassen, können korrespondierende Punkte alternativ mit Kalibrationsmessungen bestimmt werden. Hierzu kann ein punktförmiges Referenzobjekt, insbesondere ein Gold-Nanopartikel, an verschiedenen Positionen mit einem Nanopositionierer im Sichtfeld positioniert und nacheinander mit dem ersten und dem zweiten Lokalisierungsverfahren lokalisiert werden.

Bezüglich der in dem ersten Lokalisierungsschritt eingesetzten Bildaufnahmemodalität ist das erfindungsgemäße Verfahren variabel.

In einer Ausführungsform des Verfahrens erfolgt der erste Lokalisierungsschritt nach einem, insbesondere aus dem Stand der Technik bekannten, stochastischen Lokalisierungsverfahren. Hierzu zählen insbesondere die STORM (*stochastic optical reconstruction microscopy*)*-* und PALM (*photoactivated localization microscopy*)-Mikroskopie sowie die SOFI (*superresolution optical fluctuation imaging*)-Mikroskopie und die PAINT (*points accumulation for imaging in nanoscale topography*)-Mikroskopie. Dabei liegen die Emitter in einem nichtfluoreszierenden Dunkelzustand vor, und es werden einzelne Emitter spontan, durch Fotoaktivierung oder durch chemische Reaktion aus diesem Dunkelzustand in einen fluoreszenten Zustand überführt, bzw. es besteht ein durch Einstellung der experimentellen Parameter beeinflussbares Gleichgewicht zwischen dem nichtfluoreszierenden Dunkelzustand und dem fluoreszenten Zustand. Für die Lokalisierung dieser aktivierten Emitter wird das Sichtfeld insbesondere homogen mit dem Beleuchtungslicht beleuchtet, so dass alle aktivierten Emitter im Sichtfeld gleichzeitig zur Lichtemission angeregt werden. Die Detektion der Lichtemission erfolgt in diesem Fall bevorzugt mit einem ortsauflösenden bzw. bildgebenden Detektor, d. h. einem Detektor, der eine Vielzahl von einzeln auslesbaren Detektorelementen aufweist, insbesondere mit einer Kamera. Die Lage der einzelnen, d. h. optisch trennbaren Emitter, kann so durch Schwerpunktbestimmung oder Anpassen einer Modellfunktion im Bild bestimmt werden. Für den Fall, dass der erste Lokalisierungsschritt mit einem stochastischen Lokalisierungsverfahren durchgeführt wird, werden also insbesondere eine Mehrzahl von Emittern parallel abgebildet. Die Lage eines dieser Emitter kann dann als Grundlage für die Beleuchtungspositionen in dem zweiten Lokalisierungsschritt dienen.

In einer weiteren Ausführungsform des Verfahrens wird der erste Lokalisierungsschritt durch Abrastern der Probe mit dem Beleuchtungslicht durchgeführt. D.h. insbesondere erfolgt der erste Lokalisierungsschritt mittels Laserscanning, das wahlweise als konventionelles konfokales Laserscanning oder auch als STED-Laserscanning ausgeführt werden kann. Dazu wird die Probe punktweise mit fokussiertem Anregungslicht abgerastert und aus den zu jedem Rasterpunkt detektierten Lichtemissionen ein Bild rekonstruiert, in dem wiederum die einzelnen Emitter lokalisiert werden können. Für die Bildaufnahme im STED-Modus wird das Anregungslicht mit einer ein lokales Intensitätsminimum aufweisenden Verteilung von Abregungslicht überlagert, wodurch die Auflösung über die optische Beugungsgrenze hinaus verbessert und eine genauere Lokalisierung des Emitters in dem ersten Lokalisierungsschritt ermöglicht wird.

In einer weiteren Ausführungsform des Verfahrens erfolgt bereits der erste Lokalisierungsschritt nach einem MINFLUX-Verfahren (nach einem MINFLUX-Prinzip), wobei in der Praxis der erste und der zweite Lokalisierungsschritt meist Schritte eines iterativen MINFLUX-Verfahrens sind, bei dem in jeder Iteration die Lage des Emitters bestimmt und die Beleuchtungspositionen auf Basis der jeweils letzten Lagebestimmung angepasst, insbesondere dichter um den Emitter angeordnet werden. Gleichzeitig wird typischerweise auch die Intensität des Beleuchtungslichts in jeder Iteration erhöht. Wenngleich eine systematische Abweichung bei der Lokalisierung eines Emitters in aufeinanderfolgenden Iterationen des MINFLUX-Verfahrens nicht offensichtlich ist, wird in der Praxis regelmäßig ein systematischer Offset beobachtet, der vermutlich auf eine nicht perfekt rotationssymmetrische Intensitätsverteilung des Beleuchtungslichts zurückzuführen ist. Für die Konvergenz des iterativen MINFLUX-Verfahrens ist es daher vorteilhaft, die in jeder Iteration bestimmte Lage des Emitters in erfindungsgemäßer Weise zu korrigieren, um die Beleuchtungspositionen für die nachfolgende Iteration festzulegen.

In einer weiteren Ausführungsform des Verfahrens wird die Probe in dem ersten Lokalisierungsschritt mit strukturiertem Beleuchtungslicht beleuchtet, wobei die Lage und / oder die Orientierung des strukturierten Beleuchtungslichts relativ zur Probe schrittweise versetzt bzw. gedreht wird, für jeden Versatz bzw. jede Orientierung ein Bild der Probe mit einem bildgebenden Detektor aufgenommen wird und die Einzelbilder zu einem höher aufgelösten Bild verrechnet werden. Dieses Vorgehen ist aus der *Structured-Illumination*-Mikroskopie (SIM) bekannt und liefert ebenfalls eine gegenüber der konventionellen Bildaufnahme bereits bis zu zweifach gesteigerte Auflösung.

Gemäß einer weiteren Ausführungsform wird der Emitter in dem ersten Lokalisierungsschritt auf einen ortsauflösenden Detektor, insbesondere eine Kamera oder ein Detektorarray, abgebildet. Obgleich in einigen der zuvor beschriebenen Ausführungsformen - der Lokalisierung des Emitters in dem ersten Lokalisierungsschritt mittels Abtasten (insbesondere Laserscanning) oder nach einem MINFLUX-Verfahren - die Detektion der Lichtemission mit einem Punktdetektor (APD, Fotomultiplier) erfolgen kann, ist die Verwendung eines ortsauflösenden Detektors, insbesondere einer Kamera oder eines Detektorarrays, auch in diesen Ausführungsformen oft vorteilhaft. Durch Analyse der ortsaufgelösten Bildinformation kann beispielsweise erkannt werden, wenn sich mehrere emittierende Emitter innerhalb eines beugungsbegrenzten Bereichs befinden und nicht einzeln lokalisiert werden können.

Gemäß einer weiteren Ausführungsform ist die systematische Abweichung durch optische Abbildungsfehler verursacht. Systematische Abweichungen zwischen den in dem ersten Lokalisierungsschritt und in dem zweiten Lokalisierungsschritt bestimmen Lagen des Emitters treten oft infolge optischer Abbildungsfehler und insbesondere dann auf, wenn sich der optische Strahlweg, der für die Lagebestimmung in dem ersten Lokalisierungsschritt verwendet wird, von dem optischen Strahlweg, der für die Lagebestimmung in dem zweiten Lokalisierungsschritt verwendet wird, unterscheidet bzw. der erste und der zweite Lokalisierungsschritt mit optischen Mitteln durchgeführt werden, die sich in mindestens einem optischen Element voneinander unterscheiden.

Gemäß einer weiteren Ausführungsform werden der erste Lokalisierungsschritt und der zweite Lokalisierungsschritt mit optischen Mitteln durchgeführt, die sich in mindestens einem optischen Element voneinander unterscheiden.

Sobald sich die Strahlwege unterscheiden, ergibt sich die Notwendigkeit, eine Justage der Strahlwege zueinander vorzunehmen und diese ggf. über längere Zeit konstant zu halten. Außerdem sind die Abbildungseigenschaften der beiden Strahlwege in der Regel verschieden, so dass infolge von unterschiedlichen Abbildungsfehlern, insbesondere sphärischen Aberrationen, Farbquerfehlern, Koma und Astigmatismus die durch die beiden Strahlwege erfolgenden Abbildungen nicht mehr über den gesamten Bildbereich deckungsgleich sind.

Allerdings kann eine systematische Abweichung bei der Lagebestimmung des Emitters in dem ersten Lokalisierungsschritt und in dem zweiten Lokalisierungsschritt auch dann auftreten, wenn in beiden Schritten derselbe optische Strahlweg mit denselben optischen Elementen, aber verschiedenen Intensitätsverteilungen verwendet wird. So kann beispielsweise der tatsächliche Schwerpunkt einer Intensitätsverteilung des Beleuchtungslichts (z. B. einer donutförmigen Lichtverteilung) in dem zweiten Lokalisierungsschritt von dem *nominellen* Schwerpunkt (bei der donutförmigen Lichtverteilung die zentrale Nullstelle) und damit vom Zentrum der in dem ersten Lokalisationsschritt verwendeten Lichtverteilung abweichen, wodurch die Lokalisierungen systematisch voneinander abweichen. Eine intensitätsabhängige Abweichung kann auch dann auftreten, wenn die Beleuchtungspositionen Positionen umfassen, an denen der Emitter mit Lichtintensitäten beleuchtet wird, die zu einer Sättigung der Anregung führt, d.h. keine lineare Abhängigkeit der Lichtemission des Emitters von der Intensität des Beleuchtungslichts am Ort des Emitters mehr besteht. Dieser Fall kann beispielsweise dann auftreten, wenn auch der erste Lokalisierungsschritt mit einem MINFLUX-Verfahren, aber mit weiter voneinander entfernten Beleuchtungspunkten und / oder geringerer Intensität des Beleuchtungslichts ausgeführt wird.

Die systematische Abweichung der Lokalisierung eines Emitters in dem ersten Lokalisierungsschritt und in dem zweiten Lokalisierungsschritt kann im einfachsten Fall über ein interessierendes Sichtfeld homogen sein, so dass es genügt, einen einzigen Korrekturwert in Form eines Offsets zu der in dem ersten Lokalisationsschritt bestimmten Lage des Emitters zu addieren und die Beleuchtungspositionen in dem zweiten Lokalisierungsschritt basierend auf dieser korrigierten Lage festzulegen. Sofern der erste Lokalisierungsschritt nach einem MINFLUX-Verfahren arbeitet, kann eine solche Offset-Korrektur auch direkt in einem Positionsschätzer berücksichtigt sein.

Weitaus häufiger ist allerdings die Situation anzutreffen, dass die systematische Abweichung nicht homogen ist, sondern vom Ort des Emitters in der Probe abhängt und die Lagekorrektur mit ortsabhängigen Korrekturwerten bzw. Korrekturvektoren erfolgen muss. Daher werden für die Lagekorrektur gemäß einer weiteren Ausführungsform ortsabhängige Korrekturwerte oder Korrekturvektoren verwendet. Dabei kann gegebenenfalls ausgenutzt werden, dass die systematische Abweichung eine Rotationssymmetrie bezüglich einer optischen Achse aufweist, wie es beispielsweise der Fall ist, wenn die Abweichung ganz oder wesentlich durch sphärische Aberrationen, Defokus, Farbvergrößerungsfehler oder andere rotationssymmetrische Aberrationen verursacht ist. In diesen Fällen müssen die Korrekturwerte für die Lagekorrektur nicht notwendigerweise als Funktion von zwei (*xy*) bzw. drei (*xyz*) Koordinaten vorgehalten werden, sondern können aufgrund der Rotationssymmetrie auf eine Funktion eines radialen Parameters reduziert werden. Daher weisen die Korrekturwerte oder Korrekturvektoren gemäß einer weiteren Ausführungsform eine Rotationssymmetrie bezüglich einer optischen Achse auf oder eine solche Rotationssymmetrie wird vorausgesetzt.

Gemäß einer weiteren Ausführungsform werden der erste und der zweite Lokalisierungsschritt an verschiedenen Emittern wiederholt ausgeführt, wobei initial angenommene Korrekturwerte oder Korrekturvektoren jeweils nach dem zweiten Lokalisierungsschritt unter Verwendung der Differenz der in dem ersten Lokalisierungsschritt und in dem zweiten Lokalisierungsschritt bestimmten Lagen des Emitters aktualisiert werden.

In einer bevorzugten Ausführungsform des Verfahrens, bei dem der erste und der zweite Lokalisierungsschritt an verschiedenen Emittern wiederholt ausgeführt wird, können die für die Lagekorrektur verwendeten Korrekturwerte nicht nur einmalig bestimmt, sondern während der (wiederholten) Lokalisierung von Emittern fortlaufend ergänzt und / oder aktualisiert werden. Dadurch ist nicht nur eine laufende Verbesserung und / oder Ergänzung der Korrekturwerte an weiteren Positionen im Sichtfeld möglich, sondern es können auch zeitliche Drifts korrigiert werden. Das Verfahren kann auch so gestaltet werden, dass die Korrekturwerte zu Beginn einer Serie von Lokalisierungen mit Null initialisiert werden, so dass die Beleuchtungspositionen zunächst auf Basis der unkorrigierten Lagebestimmungen aus dem ersten Lokalisierungsschritt festgelegt werden. Mit jeder Lokalisierung eines Emitters kann nun aus der Differenz der in dem ersten Lokalisierungsschritt und in dem zweiten Lokalisierungsschritt bestimmten Lage des Emitters ein Korrekturwert bestimmt und in einem Speicher abgelegt werden. Wenn sich im Verlauf der Lokalisierungen ein weiterer Emitter an einer Stelle befindet, an der bereits zuvor ein Emitter lokalisiert wurde, so kann die in dem ersten Lokalisierungsschritt bestimmte Lage des Emitters mit dem zuvor (an dem früher lokalisierten Emitter) bestimmten Korrekturwert korrigiert werden. Für diesen Emitter können nun die Beleuchtungspositionen für den zweiten Lokalisierungsschritt auf Basis der korrigierten Lagebestimmung festgelegt werden, was eine dichtere Anordnung um den Emitter erlaubt. Die Verfügbarkeit von Korrekturwerten nimmt in dieser Ausführungsform mit der Zahl der lokalisierten Emitter nach und nach zu. Optional können die Korrekturwerte auch über mehrere Messungen hinweg oder sogar dauerhaft fortgeschrieben werden, um so eine zunehmend dichte Verteilung von Korrekturwerten über das Sichtfeld aufzubauen. Gegebenenfalls können mehrere Sätze von Korrekturwerten vorgehalten werden, die verschiedenen optischen Konfigurationen bei der Durchführung des ersten und / oder des zweiten Lokalisierungsschritts entsprechen. Verschiedene optische Konfigurationen können sich insbesondere durch einen Objektivwechsel ergeben.

Wie bereits ausgeführt variiert in den meisten Anwendungsfällen die systematische Abweichung der Lagebestimmung in dem ersten Lokalisierungsschritt und in dem zweiten Lokalisierungsschritt über das Sichtfeld. Da Korrekturwerte nur für eine begrenzte Zahl von Punkten im Sichtfeld bestimmt werden können, ergibt sich daher die Notwendigkeit, die Korrekturwerte für beliebige Punkte im Sichtfeld aus den bekannten Korrekturwerten zu interpolieren. Hierzu werden in einer bevorzugten Ausführungsform des Verfahrens die Korrekturwerte bzw. Korrekturvektoren als Knotenpunkte in einem Korrekturnetz organisiert. Die Korrekturvektor für die in dem ersten Lokalisierungsschritt bestimmte Lage eines Emitters kann durch Interpolation aus den Korrekturvektoren benachbarter Knoten interpoliert werden.

Gemäß einer weiteren Ausführungsform wird die systematische Abweichung durch an Knoten eines Korrekturnetzes angeordnete Korrekturwerte oder Korrekturvektoren modelliert, insbesondere wobei die Lagekorrektur durch Interpolation mehrerer Korrekturwerte oder Korrekturvektoren des Korrekturnetzes berechnet wird.

Gemäß einer weiteren Ausführungsform werden nach dem zweiten Lokalisierungsschritt Korrekturwerte oder Korrekturvektoren des Korrekturnetzes aktualisiert oder dem Korrekturnetz zusätzliche Knoten mit Korrekturwerten oder Korrekturvektoren hinzugefügt.

In das Korrekturnetz kann insbesondere nach jeder Lokalisierung eines Emitters an dessen Position ein weiterer Knotenpunkt mit einem Korrekturwert bzw. Korrekturvektor eingefügt werden, der von der Position des Emitters in Koordinaten der ersten Lokalisierung zur Position des Emitters in Koordinaten der zweiten Lokalisierung vermittelt. Aus praktischen Erwägungen - es soll die Lage des Emitters in Koordinaten der ersten Lokalisierung in das Koordinatensystem der zweiten Lokalisierung transformiert werden - bietet es sich dabei an, den Knoten des Korrekturnetzes das Koordinatensystem der ersten Lokalisierung zu Grunde zu legen. Das Korrekturnetz wird so mit jeder Lokalisierung eines Emitters um einen weiteren Knoten erweitert und damit sukzessive engmaschiger.

Alternativ kann die Anzahl der Knoten des Korrekturnetzes konstant gehalten oder auf eine Maximalzahl begrenzt werden. Auch können die Knoten auf einem regelmäßigen Raster angeordnet werden. Statt bei jeder Lokalisierung eines Emitters dem Korrekturnetz neue Knoten hinzuzufügen, empfiehlt es sich dann, die den neu lokalisierten Emitter umgebenden Knoten zu aktualisieren. Auf diese Weise können auch zeitabhängige Änderungen der systematischen Abweichungen - beispielsweise infolge von Drift - detektiert und berücksichtigt werden.

Die Korrekturvektoren des Korrekturnetzes können im einfachsten Fall vor Beginn der Lokalisierungen auf Null(-vektoren) initialisiert werden, andere Möglichkeiten bestehen in der Übernahme von Korrekturwerten, die in separaten Kalibrationsmessungen oder in früheren Messungen bestimmt wurden. Hierzu kann beispielsweise ein punktförmiger Emitter (z. B. ein Gold-Nanopartikel) an zuvor festgelegten Positionen der Netzknoten, insbesondere auf einem regelmäßigen Raster, mit einem Nanopositionierer positioniert und nacheinander mit dem ersten und dem zweiten Lokalisierungsverfahren lokalisiert werden. Sofern das optische Abbildungssystem hinreichend genau bekannt ist, können Startwerte für die Korrekturvektoren auch aus Optiksimulationen abgeleitet werden.

Gemäß einer weiteren Ausführungsform wird die systematische Abweichung durch ein parametrisiertes Ausgleichsmodell, insbesondere durch eine Polynomfunktion oder durch eine Linearkombination orthogonaler Funktionen, modelliert.

Alternativ zu einem Korrekturnetz können Korrekturwerte bzw. Korrekturvektoren auch mit Hilfe eines parametrisierten Ausgleichsmodells berechnet werden. Die Parameter des Ausgleichsmodells sind dabei insbesondere so zu bestimmen, dass die Differenz zwischen der in dem ersten Lokalisierungsschritt und in dem zweiten Lokalisierungsschritt bestimmten Lage eines Emitters einerseits und dem nach dem Ausgleichsmodell berechneten Korrekturwert bzw. Korrekturvektor andererseits übereinstimmen, d. h. dass die Differenz zwischen den gemessenen und den nach dem Ausgleichsmodell berechneten Lageunterschieden - insbesondere im Sinne einer Fehlerquadratsumme - minimiert werden.

Das Ausgleichsmodell kann konkret als (Vektor-)Funktion ausgeführt sein, die jedem Punkt im Sichtfeld einen Korrekturwert bzw. einen Korrekturvektor zuordnet. Bevorzugte (Vektor-) Funktionen sind dabei insbesondere Polynomfunktionen und Linearkombinationen orthogonaler Funktionen, wobei die Polynomkoeffizienten bzw. die Gewichtungsfaktoren der Linearkombination die Parameter des Ausgleichsmodells sind.

Die Werte für die Parameter des Ausgleichsmodells können wiederum in vorhergehenden Messungen bzw. in dedizierten Kalibrationsmessungen bestimmt werden.

Gemäß einer weiteren Ausführungsform werden der erste Lokalisierungsschritt und der zweite Lokalisierungsschritt an verschiedenen Emittern wiederholt ausgeführt, wobei die Parameter des Ausgleichsmodells jeweils nach dem zweiten Lokalisierungsschritt aktualisiert werden.

Auch bei der Verwendung eines Ausgleichsmodells zur Berechnung der Korrekturwerte bzw. Korrekturvektoren ist es vorteilhaft, die Parameter des Ausgleichsmodells sukzessive zu aktualisieren, wenn der erste und der zweite Lokalisierungsschritt an verschiedenen Emittern wiederholt ausgeführt werden. In diesem Fall können (wie zuvor für das Korrekturnetz beschrieben) die Parameter des Ausgleichsmodells mit Null initialisiert werden, so dass anfangs keine Korrektur der in dem ersten Lokalisierungsschritt bestimmten Lagen der Emitter erfolgt. Das Ausgleichsmodell kann durch Anpassung der Parameter nach jedem oder nach einer vorgegebenen Anzahl lokalisierter Emitter aktualisiert werden (zum Beispiel durch einen *Least Squares Fit*)*,* so dass das Ausgleichsmodell sukzessive genauere Korrekturwerte liefert.

In einer anderen Ausführungsform des Verfahrens werden die Korrekturwerte bzw. Korrekturvektoren mit einem *Machine-Learning-Algorithmus* (Maschinenlern-Algorithmus), insbesondere mit einem künstlichen neuronalen Netz, berechnet. Der *Machine-Learning-Algorithmus* kann vortrainiert sein, beispielsweise mittels in vorhergehenden Mess-Sitzungen lokalisierten Emittern oder aus dedizierten Kalibrationsmessungen wie in den anderen Ausführungsformen zuvor beschrieben. Der *Machine-Learning-Algorithmus* kann aber auch während der wiederholten Lokalisierung von Emittern trainiert werden, wobei die Ausgabe des Algorithmus anhand der Lokalisierungen der Emitter kontrolliert und die Lagekorrektur erst dann angewendet werden kann, wenn die Ausgabe des Algorithmus eine ausreichende Zuverlässigkeit erreicht hat.

Ein zweiter Aspekt der Erfindung betrifft ein Lichtmikroskop zur Lokalisierung einzelner Emitter in einer Probe nach dem erfindungsgemäßen Verfahren. Dazu umfasst das Lichtmikroskop
- eine Lichtquelle zum Beleuchten der Probe mit Beleuchtungslicht, wobei das Beleuchtungslicht eine Lichtemission von Emittern in der Probe induziert oder moduliert,
- optische Mittel, die eine Strahlpositionierungsvorrichtung beinhalten, und die dazu ausgebildet sind, in der Probe eine in mindestens einer Raumrichtung ein lokales Minimum aufweisende Intensitätsverteilung des oder eines anderen Beleuchtungslichts zu erzeugen und zu positionieren,
- mindestens einen Detektor, der dazu ausgebildet ist, Lichtemissionen der Emitter zu detektieren,
- eine Steuer- und Recheneinheit mit einem Speicher für Korrekturwerte oder Korrekturvektoren.

Die Lichtquelle weist insbesondere einen oder mehrere Laser auf.

Die Strahlpositionierungsvorrichtung ist insbesondere dazu ausgebildet, die Intensitätsverteilung des Beleuchtungslichts an Beleuchtungspositionen in der Probe innerhalb eines interessierenden Sichtbereichs zu positionieren. Bevorzugt ist die Strahlpositionierungsvorrichtung so ausgelegt, dass die Intensitätsverteilung zumindest zwischen Beleuchtungspositionen, die einen Abstand von weniger als 500 nm, bevorzugt von weniger als 250 nm und besonders bevorzugt von weniger als 100 nm zueinander haben, innerhalb von 10 µs, bevorzugt innerhalb von 5 µs und besonders bevorzugt innerhalb von 1 µs repositioniert werden kann. Dazu kann die Strahlpositionierungsvorrichtung insbesondere einen elektrooptischen Deflektor (EOD) oder einen akustooptischen Deflektor (AOD) aufweisen. Optional kann Strahlpositionierungsvorrichtung als Kombination einer schnellen Positionierungsvorrichtung mit einer langsameren, aber einen größeren Positionierbereich abdeckenden Positionierungsvorrichtung ausgeführt werden.

Zur Ausbildung der ein lokales Minimum aufweisenden Intensitätsverteilung des Beleuchtungslichts umfassen die optischen Mittel typischerweise einen Lichtmodulator, beispielsweise eine Phasenplatte oder einen programmierbaren Wellenfrontmodulator (z. B. einen *Spatial Light Modulator,* SLM) mit einzeln ansteuerbaren Pixeln. Insbesondere ist der Lichtmodulator dazu ausgebildet, eine Phasenverteilung des Beleuchtungslichts, insbesondere in einer zur Pupille des Objektivs konjugierten Ebene (d. h. einer Fourier-Ebene bezüglich der Bildebene) zu modulieren, so dass sich am Fokus in der Probe die Intensitätsverteilung mit dem lokalen Minimum ergibt. Die Steuer- und Recheneinheit ist dazu ausgebildet, in einem ersten Lokalisierungsschritt i) die Lichtquelle so zu steuern, dass die Lichtquelle einen Emitter mit dem Beleuchtungslicht beleuchtet, ii) den Detektor so zu steuern, dass der Detektor die Lichtemissionen des Emitters detektiert, und iii) die Lage des Emitters in der Probe aus den mit dem Detektor detektierten Lichtemissionen zu bestimmen.

Die Steuer- und Recheneinheit ist weiter dazu ausgebildet, in einem zweiten Lokalisierungsschritt iv) unter Verwendung von in einem bzw. dem Speicher zur Lagekorrektur nach dem Verfahren der Erfindung hinterlegten Korrekturwerten oder Korrekturvektoren Beleuchtungspositionen um die in dem ersten Lokalisierungsschritt bestimmte Lage des Emitters zu berechnen, v) die Lichtquelle und / oder die optischen Mittel so zu steuern, dass die Lichtquelle die Probe mit der ein lokales Minimum aufweisenden Intensitätsverteilung des Beleuchtungslichts oder des anderen Beleuchtungslichts an den Beleuchtungspositionen beleuchtet, vi) den Detektor oder einen weiteren Detektor so zu steuern, dass der Detektor oder der weitere Detektor die Lichtemissionen des Emitters zu den Beleuchtungspositionen detektiert und vii) aus den detektierten Lichtemissionen eine Lage des Emitters in der Probe zu berechnen.

Die Steuer- und Recheneinheit ist insbesondere eingerichtet, aus der in dem ersten Lokalisierungsschritt bestimmten Lage des Emitters und den in dem Speicher hinterlegten Korrekturwerten oder Korrekturvektoren die Beleuchtungspositionen in einem optimalem Abstand zu dem Emitter zu bestimmen, wobei als optimaler Abstand ein möglichst geringer Abstand von dem Emitter unter der Randbedingung zu verstehen ist, dass sich die tatsächliche Lage des Emitters innerhalb der konvexen Hülle der Beleuchtungspositionen befindet.

Das in dem zweiten Lokalisierungsschritt verwendete Beleuchtungslicht kann das gleiche Beleuchtungslicht wir in dem ersten Lokalisierungsschritt sein; es kann sich aber auch um ein anderes Beleuchtungslicht, insbesondere mit abweichender Wellenlänge, abweichender Intensitätsverteilung oder abweichender Lichtleistung, handeln. Dazu kann das Lichtmikroskop eine zweite Lichtquelle, insbesondere einen zweiten Laser umfassen.

Gemäß einer weiteren Ausführungsform weist das Lichtmikroskop einen ersten Detektor auf, der dazu ausgebildet ist, die Lichtemissionen des Emitters in dem ersten Lokalisierungsschritt zu detektieren, wobei das Lichtmikroskop einen weiteren zweiten Detektor aufweist, der dazu ausgebildet ist, die Lichtemissionen des Emitters in dem zweiten Lokalisierungsschritt zu detektieren.

Eine bevorzugte Ausführungsform des Lichtmikroskops ist dadurch gekennzeichnet, dass der oder der weitere Detektor eine Vielzahl von Detektorelementen aufweist. Insbesondere sind die Detektorelemente einzeln auslesbar. Insbesondere ist der Detektor oder eine mit dem Detektor gekoppelte Auswerteelektronik dazu ausgebildet, einzelne von dem Emitter emittierte und von den Detektorelementen detektierte Photonen zu registrieren. Dazu kann eine Auswerteelektronik (z. B. ein sogenanntes TCSPC-Modul) vorgesehen sein. Für die Detektion der Lichtemissionen in dem ersten Lokalisierungsschritt und in dem zweiten Lokalisierungsschritt kann dabei derselbe Detektor verwendet werden, oder es können verschiedene Detektoren zum Einsatz kommen, z. B. eine Kamera in dem ersten Lokalisierungsschritt und ein Punktdetektor oder ein APD-Array in dem zweiten Lokalisierungsschritt.

In einer weiteren Ausführungsform des Lichtmikroskops ist die Steuer -und Recheneinheit so ausgebildet ist, dass die in dem Speicher hinterlegten Korrekturwerte oder Korrekturvektoren nach dem zweiten Lokalisierungsschritt aktualisiert oder ergänzt werden.

Ein dritter Aspekt der Erfindung betrifft ein Computerprogramm umfassend Befehle, die das Lichtmikroskop nach dem zweiten Aspekt dazu veranlassen, das Verfahren nach dem ersten Aspekt auszuführen.

Vorteilhafte Weiterbildungen der Erfindung ergeben sich aus den Patentansprüchen, der Beschreibung und den Zeichnungen und den zugehörigen Erläuterungen zu den Zeichnungen. Die beschriebenen Vorteile von Merkmalen und / oder Merkmalskombinationen der Erfindung sind lediglich beispielhaft und können alternativ oder kumulativ zur Wirkung kommen.

Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

Im Folgenden werden Ausführungsbeispiele der Erfindung anhand der Figuren beschrieben. Diese beschränken nicht den Gegenstand dieser Offenbarung und den Schutzumfang.

### Kurzbeschreibung der Figuren

- Fig. 1: zeigt ein Ablaufschema eines Ausführungsbeispiels des erfindungsgemäßen Verfahrens;
- Fig. 2: zeigt ein Ausführungsbeispiel eines Korrekturnetzes;
- Fig. 3: zeigt ein Ausführungsbeispiel einer Lagekorrektur;
- Fig. 4: zeigt ein erstes Ausführungsbeispiel eines erfindungsgemäßen Lichtmikroskops
- Fig. 5: zeigt ein zweites Ausführungsbeispiel eines erfindungsgemäßen Lichtmikroskops.

### Beschreibung der Figuren

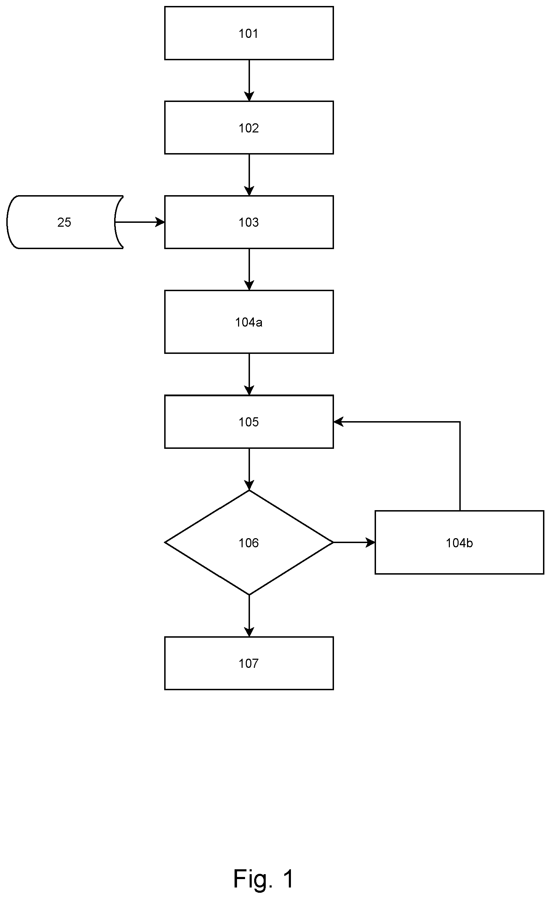

Fig. 1 zeigt ein Ablaufschema eines beispielhaften erfindungsgemäßen Verfahrens. In Schritt 101 wird zunächst ein einzelner Emitter E (insbesondere ein Fluorophor oder ein mit Fluorophoren markierter Partikel) in einer mit Beleuchtungslicht B, das Lichtemissionen des Emitters E induziert oder moduliert, insbesondere Anregungslicht, beleuchteten Probe 2 ausgewählt. Das Auswählen kann dadurch erfolgen, dass mit einem Punktdetektor 5 detektierte Lichtemissionen dem einzelnen Emitter E zugeordnet werden oder dass die Lichtemissionen mehrerer Emitter E mit einem ortsauflösenden Detektor 5 detektiert werden und aus diesen mehreren Emittern E ein einzelner Emitter E automatisch oder manuell ausgewählt wird. Dafür kann die Probe 2 mit dem Beleuchtungslicht B abgetastet werden oder im Weitfeld beleuchtet werden.

Als nächstes wird in Schritt 102 in einem ersten Lokalisierungsschritt die Lage des ausgewählten Emitters E aus den detektierten Lichtemissionen bestimmt. Beispielsweise können die Lichtemissionen bestimmten Scanpositionen eines die Probe 2 abtastenden Lichtstrahls des Beleuchtungslichts B zugeordnet und damit die Lage des Emitters E bestimmt werden, wie dies etwa aus der konfokalen Laserscanning-Mikroskopie bekannt ist. Alternativ dazu kann die Lage z.B. mittels stochastischer Lokalisationsmikroskopie bestimmt werden, z.B. mit der PALM/STORM-, SOFI- oder PAINT-Methode. Hierzu wird insbesondere mit einem ortsauflösenden Detektor 5 eine Zeitreihe von Bildern mehrerer Emitter E in der Probe aufgenommen, wobei die Emitter E asynchron blinken, d.h., insbesondere periodisch, zwischen einem nicht-emittierenden Zustand und einem emittierenden Zustand wechseln. Auf diese Weise kann die Position des einzelnen Emitters E bei einer entsprechenden Anzahl detektierter Photonen mit einer Auflösung unterhalb der (also besser als die) Beugungsgrenze bestimmt werden.

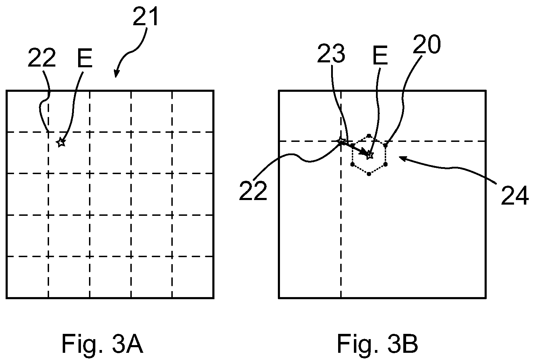

Im Schritt 103 werden für einen zweiten Lokalisierungsschritt nach dem MINFLUX-Prinzip auf Basis der in dem ersten Lokalisierungsschritt bestimmten Lage des Emitters E und auf Basis von Lagekorrekturdaten 25 Beleuchtungspositionen 20 festgelegt. Die Beleuchtungspositionen 20 bilden ein Beleuchtungsmuster 24 um die in dem ersten Lokalisierungsschritt bestimmte Lage des Emitters E, z.B. ein symmetrisches sechseckförmiges Muster (siehe Fig. 3).

Eine Intensitätsverteilung des Beleuchtungslichts B oder eines anderen Beleuchtungslichts, das die Lichtemissionen des Emitters E induziert oder moduliert, mit einem lokalen Minimum, mindestens einem Maximum und mindestens einem Intensitätsanstiegsbereich wird dann in den Schritten 104a und 104b nacheinander so gegenüber der Probe 2 verschoben, dass sich das lokale Minimum an den Beleuchtungspositionen 20 befindet.

Im Schritt 105 wird die Probe 2 an den Beleuchtungspositionen 20 mit der Intensitätsverteilung des Beleuchtungslichts B beleuchtet und die Lichtemissionen des Emitters E werden für jede Beleuchtungsposition 20 detektiert.

Im Schritt 106 wird überprüft, ob die vorab festgelegte Anzahl von Beleuchtungspositionen 20 erreicht ist, oder weitere Beleuchtungspositionen 20 folgen.

Auf Basis der detektierten Lichtemissionen wird dann in Schritt 107 die Lage des Emitters E mit hoher Genauigkeit bestimmt, z.B. mit einem *Maximum-Likelihood*-Positionsschätzer*.*

Das zweite Lokalisierungsverfahren kann in mehreren Iterationen durchgeführt werden, wobei die in Schritt 107 bestimmte Lage des Emitters E verwendet wird, um neue Beleuchtungspositionen 20 festzulegen, insbesondere solche die einen geringeren Abstand zu der bestimmten Lage haben als in der vorhergehenden Iteration.

Die Lagekorrekturdaten 25 können z.B. Korrekturwerte oder Korrekturvektoren 23 aufweisen, die insbesondere Teil eines Korrekturnetzes 21 sein können.

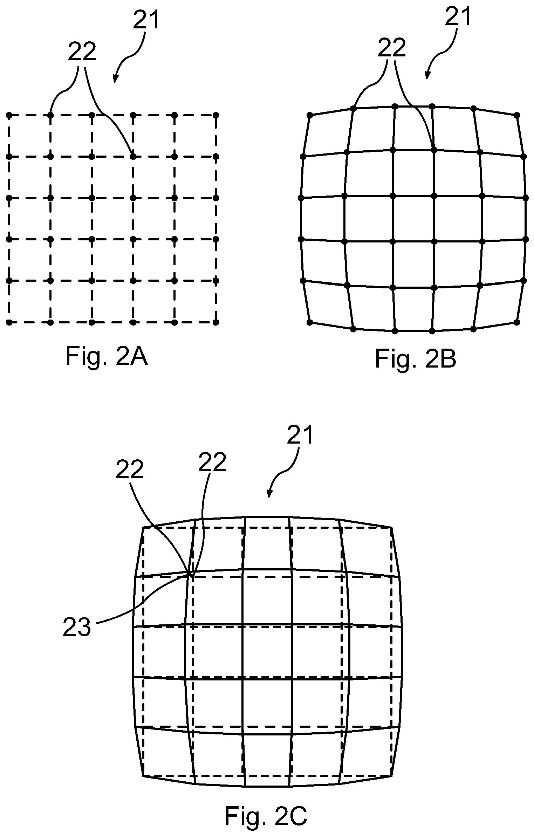

Die Lagekorrektur mittels solcher Korrekturnetze 21 ist in **Fig. 2** und **Fig. 3** schematisch dargestellt. Fig. 2A zeigt ein erstes Korrekturnetz 21 aus Knoten 22, welche ein Koordinatensystem einer Lagebestimmung mittels des ersten Lokalisierungsschritts bilden. In Fig. 2B ist ein zweites Korrekturnetz 21 mit Knoten 22 gezeigt, das die Lage des Emitters E in Koordinaten des ersten Lokalisierungsschrittes in das Koordinatensystem der zweiten Lokalisierungsschrittes transformiert. Fig. 2C zeigt die Überlagerung der beiden in Fig. 2A und Fig. 2B gezeigten Korrekturnetze 21. Zwischen zwei miteinander korrespondierenden Knoten 22 ist ein Korrekturvektor 23 dargestellt, der für diese beiden Knoten 22 die Koordinatentransformation von dem Koordinatensystem des ersten Lokalisierungsschrittes in das Koordinatensystem des zweiten Lokalisierungsschrittes definiert.

In **Fig. 3A** ist die im ersten Lokalisierungsschritt bestimmte Lage des Emitters E relativ zu dem ersten Korrekturnetz 21 dargestellt. Fig. 3B zeigt die zur Festlegung der Beleuchtungspositionen 20 verwendete korrigierte Lage des Emitters E in den Koordinaten des zweiten Lokalisierungsschritts sowie einen Korrekturvektor 23 zwischen diesen Lagen. Die Beleuchtungspositionen 20 bilden ein sechseckförmiges Beleuchtungsmuster 24, wobei das Zentrum des Beleuchtungsmusters 24 an der korrigierten Lage des Emitters E angeordnet ist.

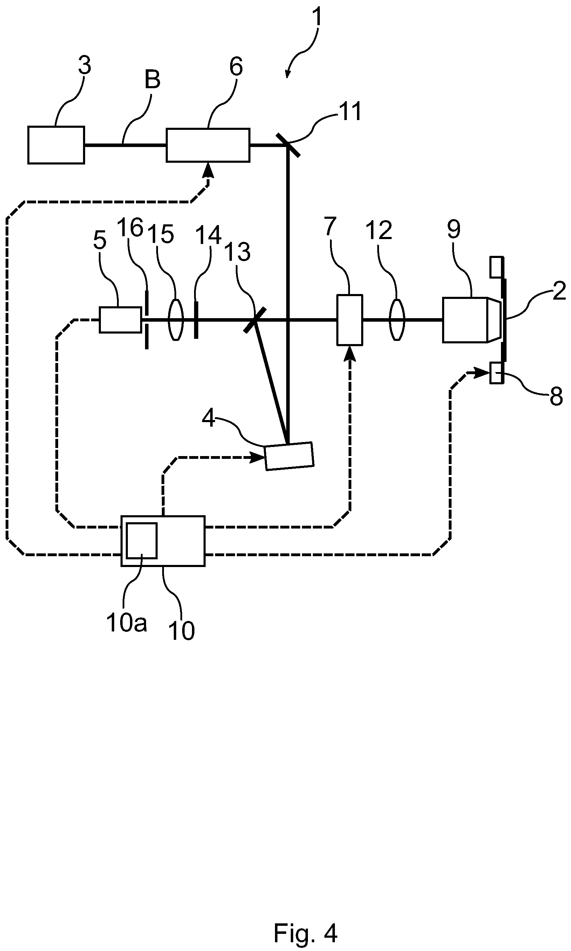

**Fig. 4** zeigt ein Ausführungsbeispiel eines erfindungsgemäßen Lichtmikroskops 1 zur Lokalisierung einzelner Emitter E in einer Probe 2. Das Lichtmikroskop 1 weist eine Lichtquelle 3, z.B. einen Laser, zur Erzeugung eines Lichtstrahls des Beleuchtungslichts B auf. Der Lichtstrahl durchläuft eine Strahlpositionierungsvorrichtung 6, z.B. in Form eines oder mehrerer elektrooptischer Deflektoren, und wird an einem Spiegel 11 auf einen Lichtmodulator 4 reflektiert, der das Beleuchtungslicht B in seiner Phase moduliert, um am Fokus in der Probe 2 eine Lichtverteilung des Beleuchtungslichts B mit einem lokalen Minimum, z.B. einen 2D-Donut oder einen 3D-Donut (*bottle beam*) zu erzeugen.

Der phasenmodulierte Lichtstrahl wird dann an einem dichroitischen Strahlteiler 13 reflektiert und gelangt über eine weitere Strahlpositionierungsvorrichtung 7, insbesondere einen galvanometrischen Scanner, und eine Tubuslinse 12 zu einem Objektiv 9, welches das Beleuchtungslicht B in die Probe 2 fokussiert.

Die Probe 2 wird von einem Probenhalter gehalten, welcher über eine Probenpositionierungsvorrichtung 8, insbesondere einen piezoelektrischen Aktuator, bewegbar ist.

Das von Emittern E in der Probe 2 emittierte Licht wird von dem dichroitischen Strahlteiler 13 transmittiert und gelangt über einen Emissionsfilter 14, eine Linse 15 und eine konfokale Lochblende 16 zu einem Detektor 5, die Lichtemissionen der Emitter E detektiert.

Das Lichtmikroskop 1 weist weiterhin eine Steuer- und Recheneinheit 10 mit einem Speicher 10a auf, wobei die Steuer- und Recheneinheit 10 dazu ausgebildet ist, Daten von dem Detektor 5 zu empfangen, aus den von dem Detektor 5 detektierten Lichtemissionen die Lage eines einzelnen Emitters E in der Probe zu bestimmen und aufgrund der in dem ersten Lokalisierungsschritt ermittelten Lage des Emitters E die Beleuchtungspositionen 20 für den zweiten Lokalisierungsschritt festzulegen. Dazu verwendet die Steuer- und Recheneinheit 10 die in dem Speicher 10a abgelegten Lagekorrekturdaten 25, insbesondere Korrekturwerte oder Korrekturvektoren 23.

Auf Basis der so festgelegten Beleuchtungspositionen 20 steuert die Steuer- und Recheneinheit 10 in dem zweiten Lokalisierungsschritt insbesondere die Strahlpositionierungsvorrichtungen 6 und/oder 7 und/oder die Probenpositionierungsvorrichtung 8, so dass das Minimum der Intensitätsverteilung des Beleuchtungslichts B nacheinander an den Beleuchtungspositionen 20 positioniert wird. Dann berechnet die Steuer- und Recheneinheit 10 auf Basis der in dem zweiten Lokalisierungsschritt detektierten Lichtemissionen und der zugehörigen Beleuchtungspositionen 20 die Lage des Emitters E in der Probe 2 mit hoher Genauigkeit.

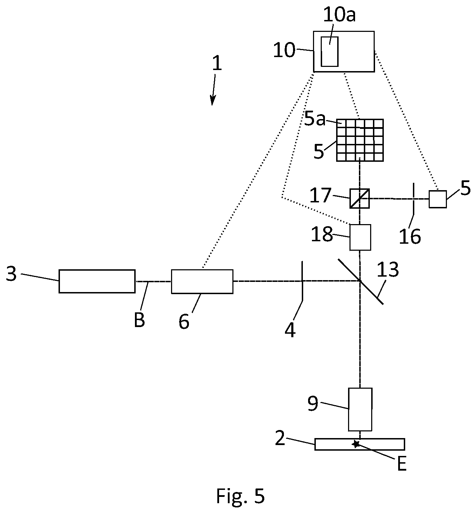

**Fig. 5** zeigt ein weiteres Ausführungsbeispiel eines erfindungsgemäßen Lichtmikroskops 1. Dieses ist bis auf den Detektionsstrahlengang weitgehend analog zu dem in Fig. 4 gezeigten Lichtmikroskop 1 aufgebaut. Das von dem Emitter 2 emittierte und von dem dichroitischen Strahlteiler 13 transmittierte Licht durchläuft einen Strahlteiler 17, der das Licht in zwei Teilstrahlengänge aufteilt. In dem einen Teilstrahlengang befindet sich ein ortsauflösender Detektor 5 mit mehreren in einer Detektionsebene (Bildebene bezüglich der Fokusebene in der Probe) angeordneten Detektorelementen 5a, z.B. eine Kamera oder ein sogenannter SPAD-Array (eine zweidimensionale Anordnung von Einzelphotonen zählenden *Avalanche-*Photodioden). Der andere Teilstrahlengang enthält (wie bei dem in Fig. 4 gezeigten Lichtmikroskop 1) einen hinter einer konfokalen Lochblende 16 angeordneten Punktdetektor 5.

Der Strahlteiler 17 kann ein Neutralstrahlteiler (z.B. ein 50/50-Strahlteiler) sein, so dass stets ein Teil des emittierten Lichts zu beiden Detektoren 5 gelangt. Alternativ dazu kann es sich bei dem Strahlteiler 17 z.B. auch um einen Polarisations-Strahlteiler handeln. In diesem Fall kann die Polarisationsrichtung des emittierten Lichts mit einem optionalen Schaltelement 18 (z.B. einer Pockels-Zelle mit vorgelagerter λ/2-Platte) durch Senden eines Steuersignals von der Steuer- und Recheneinheit 10 gedreht werden, so dass das emittierte Licht wahlweise in einen der beiden Teilstrahlengänge gelangt.

Insbesondere wird bei dem ersten Lokalisierungsschritt der ortsauflösende Detektor 5 verwendet und bei dem zweiten Lokalisierungsschritt wird der Punktdetektor zur Detektion eingesetzt. Die Verwendung eines ortsauflösenden Detektors 5 im ersten Lokalisierungsschritt hat insbesondere den Vorteil, dass mehrere Emitter E parallel aufgefunden und vorlokalisiert werden können. Wenn z.B. ein SPAD-Array ausreichender Größe als ortsauflösender Detektor 5 verwendet wird, kann allerdings gegebenenfalls auf den Punktdetektor und den Strahlteiler 17 verzichtet werden, da ein solcher Detektor insbesondere aufgrund seiner Fähigkeit, einzelne Photonen zu detektieren, für ein MINFLUX-Verfahren geeignet ist.

Auch zwischen der Beleuchtung kann bei Bedarf zwischen dem ersten Lokalisierungsschritt und dem zweiten Lokalisierungsschritt umgeschaltet werden (nicht gezeigt). So kann die Probe 2 z.B. im ersten Lokalisierungsschritt im Weitfeld mit dem Beleuchtungslicht B beleuchtet werden und im zweiten Lokalisierungsschritt kann das Beleuchtungslicht B in die Probe 2 fokussiert werden, um die Intensitätsverteilung mit dem lokalen Minimum in der Probe 2 zu erzeugen und zu repositionieren.

### Bezugszeichenliste

- 1: Lichtmikroskop
- 2: Probe
- 3: Lichtquelle
- 4: Lichtmodulator
- 5: Detektor
- 5a: Detektorelement
- 6: Strahlpositionierungsvorrichtung, insbesondere elektrooptischer Modulator
- 7: Strahlpositionierungsvorrichtung, insbesondere Galvo-Scanner
- 8: Probenpositionierungsvorrichtung, insbesondere Piezo-Aktuator
- 9: Objektiv
- 10: Steuer- und Recheneinheit
- 10a: Speicher
- 11: Spiegel
- 12: Tubuslinse
- 13: dichroitischer Strahlteiler
- 14: Emissionsfilter
- 15: Linse
- 16: Lochblende
- 17: Strahlteiler
- 18: Schaltelement
- 20: Beleuchtungsposition
- 21: Korrekturnetz
- 22: Knoten
- 23: Korrekturvektor
- 24: Beleuchtungsmuster
- 25: Lagekorrekturdaten
- 101: Auswählen eines Emitters
- 102: erstes Bestimmen der Lage des Emitters
- 103: Festlegen von Beleuchtungspositionen
- 104a: Positionieren des Beleuchtungslichts an einer ersten Beleuchtungsposition
- 104b: Positionieren des Beleuchtungslichts an der nächsten Beleuchtungsposition
- 105: Beleuchten des Emitters und Detektieren von Lichtemissionen
- 106: Überprüfen, ob die letzte Beleuchtungsposition erreicht ist
- 107: zweites Bestimmen der Lage des Emitters
- B: Beleuchtungslicht
- E: Emitter

## Patentansprüche

1. Verfahren zur Lokalisierung einzelner Emitter (E) in einer Probe (2) mit einem ersten Lokalisierungsschritt umfassend die Verfahrensschritte
- Beleuchten der Probe (2) mit Beleuchtungslicht (B), wobei das Beleuchtungslicht (B) Lichtemissionen eines Emitters (E) induziert oder moduliert;
- Detektieren der Lichtemissionen des Emitters (E);
- Bestimmen der Lage des Emitters (E) in der Probe (2) aus den detektierten Lichtemissionen;
und einen zweiten Lokalisierungsschritt mit einer gegenüber dem ersten Lokalisierungsschritt gesteigerten Genauigkeit umfassend die Verfahrensschritte
- Beleuchten des Emitters (E) mit einer in mindestens einer Raumrichtung ein lokales Minimum aufweisenden Intensitätsverteilung des Beleuchtungslichts (B) oder eines anderen Beleuchtungslichts an Beleuchtungspositionen (20), die um die in dem ersten Lokalisierungsschritt bestimmte Lage des Emitters (E) angeordnet sind;
- Detektieren der Lichtemissionen des Emitters (E) zu den Beleuchtungspositionen (20);
- Bestimmen der Lage des Emitters (E) aus den zu den Beleuchtungspositionen (20) detektierten Lichtemissionen;
**dadurch gekennzeichnet,**
**dass** die in dem ersten Lokalisierungsschritt bestimmte Lage des Emitters (E) eine systematische Abweichung gegenüber der in dem zweiten Lokalisierungsschritt bestimmten Lage desselben Emitters (E) aufweist, wobei die systematische Abweichung durch ein Auftreten von im Rahmen der Messgenauigkeit gleichen Abweichungen zwischen dem ersten Lokalisierungsschritt und dem zweiten Lokalisierungsschritt bei wiederholten Lokalisierungen ein- und desselben Emitters (E) definiert ist, und dass zur Festlegung der Beleuchtungspositionen (20) in dem zweiten Lokalisierungsschritt eine die systematische Abweichung kompensierende Lagekorrektur angewendet wird, um die in dem ersten Lokalisierungsschritt bestimmten Lage eines Emitters (E) einer korrespondierenden Lage des Emitters (E) in dem zweiten Lokalisierungsschritt zuzuordnen.

2. Verfahren nach Anspruch 1, **dadurch gekennzeichnet, dass** der erste Lokalisierungsschritt nach einem stochastischen Lokalisierungsverfahren durchgeführt wird.

3. Verfahren nach Anspruch 1, **dadurch gekennzeichnet, dass** der erste Lokalisierungsschritt durch Abrastern der Probe (2) mit dem Beleuchtungslicht (B) durchgeführt wird.

4. Verfahren nach Anspruch 1, **dadurch gekennzeichnet, dass** der erste Lokalisierungsschritt nach einem MINFLUX-Prinzip durchgeführt wird.

5. Verfahren nach einem der Ansprüche 1 bis 4, **dadurch gekennzeichnet, dass** der Emitter (E) in dem ersten Lokalisierungsschritt auf einen ortsauflösenden Detektor (5), insbesondere auf eine Kamera oder ein Detektorarray, abgebildet wird.

6. Verfahren nach einem der Ansprüche 1 bis 5, **dadurch gekennzeichnet, dass** die systematische Abweichung durch optische Abbildungsfehler verursacht ist.

7. Verfahren nach einem der Ansprüche 1 bis 6, **dadurch gekennzeichnet, dass** der erste Lokalisierungsschritt und der zweite Lokalisierungsschritt mit optischen Mitteln durchgeführt werden, die sich in mindestens einem optischen Element voneinander unterscheiden.

8. Verfahren nach einem der Ansprüche 1 bis 7, **dadurch gekennzeichnet, dass** für die Lagekorrektur ortsabhängige Korrekturwerte oder Korrekturvektoren (23) verwendet werden, insbesondere wobei die Korrekturwerte oder Korrekturvektoren (23) eine Rotationssymmetrie bezüglich einer optischen Achse aufweisen oder eine solche Rotationssymmetrie vorausgesetzt wird.

9. Verfahren nach Anspruch 8, **dadurch gekennzeichnet, dass** der erste und der zweite Lokalisierungsschritt an verschiedenen Emittern (E) wiederholt ausgeführt werden und dass initial angenommene Korrekturwerte oder Korrekturvektoren (23) jeweils nach dem zweiten Lokalisierungsschritt unter Verwendung der Differenz der in dem ersten Lokalisierungsschritt und in dem zweiten Lokalisierungsschritt bestimmten Lagen des Emitters (E) aktualisiert werden.

10. Verfahren nach einem der Ansprüche 1 bis 9, **dadurch gekennzeichnet, dass** die systematische Abweichung durch an Knoten (22) eines Korrekturnetzes (21) angeordnete Korrekturwerte oder Korrekturvektoren (23) modelliert wird, insbesondere wobei die Lagekorrektur durch Interpolation mehrerer Korrekturwerte oder Korrekturvektoren (23) des Korrekturnetzes (21) berechnet wird.

11. Verfahren nach Anspruch 10, **dadurch gekennzeichnet, dass** nach dem zweiten Lokalisierungsschritt Korrekturwerte oder Korrekturvektoren (23) des Korrekturnetzes (21) aktualisiert oder dem Korrekturnetz (21) zusätzliche Knoten (22) mit Korrekturwerten oder Korrekturvektoren (23) hinzugefügt werden.

12. Verfahren nach einem der Ansprüche 1 bis 9, **dadurch gekennzeichnet, dass** die systematische Abweichung durch ein parametrisiertes Ausgleichsmodell, insbesondere durch eine Polynomfunktion oder durch eine Linearkombination orthogonaler Funktionen, modelliert wird, insbesondere wobei der erste und der zweite Lokalisierungsschritt an verschiedenen Emittern (E) wiederholt ausgeführt werden, und wobei die Parameter des Ausgleichsmodells jeweils nach dem zweiten Lokalisierungsschritt aktualisiert werden.

13. Verfahren nach einem der Ansprüche 1 bis 9, **dadurch gekennzeichnet, dass** die Korrekturwerte oder Korrekturvektoren (23) mit einem *Machine-Learning*-Algorithmus berechnet werden.

14. Lichtmikroskop (1) zur Lokalisierung einzelner Emitter (E) in einer Probe (2) nach einem Verfahren gemäß einem der Ansprüche 1 bis 13, umfassend
- eine Lichtquelle (3) zum Beleuchten der Probe (2) mit Beleuchtungslicht (B), wobei das Beleuchtungslicht (B) Lichtemissionen von Emittern (E) in der Probe (2) induziert oder moduliert,
- eine Strahlpositionierungsvorrichtung (6,7) beinhaltende optische Mittel, die dazu ausgebildet sind, in der Probe (2) eine in mindestens einer Raumrichtung ein lokales Minimum aufweisende Intensitätsverteilung des Beleuchtungslichts (B) oder eines anderen Beleuchtungslichts zu erzeugen und/oder zu positionieren,
- mindestens einen Detektor (5), der dazu ausgebildet ist, Lichtemissionen der Emitter (E) zu detektieren,
- eine Steuer- und Recheneinheit (10) mit einem Speicher (10a) für Korrekturwerte oder Korrekturvektoren (23), die dazu ausgebildet ist, in einem ersten Lokalisierungsschritt
i. die Lichtquelle (3) so zu steuern, dass die Lichtquelle (3) einen Emitter (E) mit dem Beleuchtungslicht (B) beleuchtet, und den Detektor (5) so zu steuern, dass der Detektor (5) die Lichtemissionen des Emitters (E) detektiert;
ii. die Lage des Emitters (E) in der Probe (2) aus den mit dem Detektor (5) detektierten Lichtemissionen zu bestimmen;
und die weiterhin dazu ausgebildet ist, in einem zweiten Lokalisierungsschritt
iii. unter Verwendung von in dem Speicher (10a) zu einer Lagekorrektur nach einem der Ansprüche 1 bis 13 hinterlegten Korrekturwerten oder Korrekturvektoren (23) Beleuchtungspositionen (20) um die in dem ersten Lokalisierungsschritt bestimmte Lage des Emitters (E) zu berechnen;
iv. die Lichtquelle (3) und / oder die optischen Mittel so zu steuern, dass die Lichtquelle (3) die Probe (2) mit der ein lokales Minimum aufweisenden Intensitätsverteilung des Beleuchtungslichts (B) oder des anderen Beleuchtungslichts an den Beleuchtungspositionen (20) beleuchtet;
v. den Detektor (5) oder einen weiteren Detektor so zu steuern, dass der Detektor (5) oder der weitere Detektor die Lichtemissionen des Emitters (E) zu den Beleuchtungspositionen (20) detektiert;
vi. aus den detektierten Lichtemissionen eine Lage des Emitters (E) in der Probe (2) zu berechnen.

15. Computerprogramm umfassend Befehle, die das Lichtmikroskop (1) nach Anspruch 14 dazu veranlassen, das Verfahren nach einem der Ansprüche 1 bis 13 auszuführen.

## Claims

1. A method for localizing individual emitters (E) in a sample (2) with a first localization step comprising the method steps
- illuminating the sample (2) with illumination light (B), wherein the illumination light (B) induces or modulates light emissions of an emitter (E);
- detecting the light emissions of the emitter (E);
- determining the position of the emitter (E) in the sample (2) from the detected light emissions;
and a second localization step with increased accuracy compared to the first localization step, comprising the method steps
- illuminating the emitter (E) with an intensity distribution of the illumination light (B) or another illumination light comprising a local minimum in at least one spatial direction at illumination positions (20) which are arranged around the position of the emitter (E) determined in the first localization step;
- detecting the light emissions of the emitter (E) for the illumination positions (20);
- determining the position of the emitter (E) from the light emissions detected for the illumination positions (20);
**characterized in that**
the position of the emitter (E) determined in the first localization step comprises a systematic deviation from the position of the same emitter (E) determined in the second localization step, wherein the systematic deviation is defined by an occurrence of deviations between the first localization step and the second localization step which are equal within the measurement accuracy in the case of repeated localizations of one and the same emitter (E), and **in that** a position correction compensating for the systematic deviation is used to determine the illumination positions (20) in the second localization step in order to assign the position of an emitter (E) determined in the first localization step to a corresponding position of the emitter (E) in the second localization step.

2. The method according to claim 1, **characterized in that** the first localization step is carried out according to a stochastic localization method.

3. The method according to claim 1, **characterized in that** the first localization step is carried out by scanning the sample (2) with the illumination light (B).

4. The method according to claim 1, **characterized in that** the first localization step is carried out according to a MINFLUX principle.

5. The method according to one of the claims 1 to 4, **characterized in that** the emitter (E) is imaged onto a spatially resolving detector (5), in particular onto a camera or a detector array, in the first localization step.

6. The method according to one of the claims 1 to 5, **characterized in that** the systematic deviation is caused by optical imaging errors.

7. The method according to one of the claims 1 to 6, **characterized in that** the first localization step and the second localization step are carried out using optical means which differ from one another in at least one optical element.

8. The method according to one of the claims 1 to 7, **characterized in that** position-dependent correction values or correction vectors (23) are used for the position correction, in particular wherein the correction values or correction vectors (23) comprise a rotational symmetry with respect to an optical axis or such a rotational symmetry is assumed.

9. The method according to claim 8, **characterized in that** the first and second localization steps are carried out repeatedly with different emitters (E) and **in that** initially assumed correction values or correction vectors (23) are updated in each case after the second localization step using the difference between the positions of the emitter (E) determined in the first localization step and in the second localization step.

10. The method according to one of the claims 1 to 9, **characterized in that** the systematic deviation is modelled by correction values or correction vectors (23) arranged at nodes (22) of a correction network (21), in particular wherein the position correction is calculated by interpolation of several correction values or correction vectors (23) of the correction network (21).

11. The method according to claim 10, **characterized in that,** after the second localization step, correction values or correction vectors (23) of the correction network (21) are updated or additional nodes (22) with correction values or correction vectors (23) are added to the correction network (21).

12. The method according to one of the claims 1 to 9, **characterized in that** the systematic deviation is modelled by a parameterized compensation model, in particular by a polynomial function or by a linear combination of orthogonal functions, in particular wherein the first and the second localization step are carried out repeatedly at different emitters (E), and wherein the parameters of the compensation model are updated in each case after the second localization step.

13. The method according to one of the claims 1 to 9, **characterized in that** the correction values or correction vectors (23) are calculated using a machine learning algorithm.

14. A light microscope (1) for localizing individual emitters (E) in a sample (2) by a method according to one of the claims 1 to 13, comprising
- a light source (3) for illuminating the sample (2) with illumination light (B), wherein the illumination light (B) induces or modulates light emissions from emitters (E) in the sample (2),
- optical means comprising a beam positioning device (6, 7) which are configured to generate and/or position in the sample (2) an intensity distribution of the illumination light (B) or of another illumination light having a local minimum in at least one spatial direction,
- at least one detector (5) which is configured to detect light emissions from the emitters (E),
- a control and computing unit (10) comprising a memory (10a) for correction values or correction vectors (23), which is configured, in a first localization step
i. to control the light source (3) so that the light source (3) illuminates an emitter (E) with the illumination light (B), and to control the detector (5) so that the detector (5) detects the light emissions of the emitter (E);
ii. to determine the position of the emitter (E) in the sample (2) from the light emissions detected by the detector (5);
and which is furthermore configured in a second localization step
iii. to calculate illumination positions (20) using correction values or correction vectors (23) stored in the memory (10a) for a position correction according to one of the claims 1 to 13 in order to calculate the position of the emitter (E) determined in the first localization step;
iv. to control the light source (3) and/or the optical means in such a way that the light source (3) illuminates the sample (2) with the intensity distribution having a local minimum of the illumination light (B) or the other illumination light at the illumination positions (20);
v. to control the detector (5) or a further detector in such a way that the detector (5) or the further detector detects the light emissions of the emitter (E) for the illumination positions (20);
vi. to calculate the position of the emitter (E) in the sample (2) from the detected light emissions.

15. A computer program comprising instructions that cause the light microscope (1) according to claim 14 to perform the method according to one of the claims 1 to 13.

## Revendications

1. Procédé de localisation d'émetteurs individuels (E) dans un échantillon (2) avec une première étape de localisation comprenant les étapes de procédé suivantes
- illuminer l'échantillon (2) avec une lumière d'illumination (B), la lumière d'illumination (B) induisant ou modulant des émissions lumineuses d'un émetteur (E) ;
- détecter les émissions lumineuses de l'émetteur (E) ;
- déterminer la position de l'émetteur (E) dans l'échantillon (2) à partir des émissions lumineuses détectées ;
et une deuxième étape de localisation avec une précision accrue par rapport à la première étape de localisation, comprenant les étapes de procédé suivantes
- illuminer l'émetteur (E) avec une distribution d'intensité de la lumière d'illumination (B) ou d'une autre lumière d'illumination présentant un minimum local dans au moins une direction spatiale, à des positions d'illumination (20) disposées autour de la position de l'émetteur (E) déterminée dans la première étape de localisation ;
- détecter les émissions lumineuses de l'émetteur (E) sur les positions d'illumination (20) ;
- déterminer la position de l'émetteur (E) à partir des émissions lumineuses détectées par rapport aux positions d'illumination (20) ;
**caractérisé en ce que**
la position de l'émetteur (E) déterminée dans la première étape de localisation présente un écart systématique par rapport à la position du même émetteur (E) déterminée dans la deuxième étape de localisation, l'écart systématique étant défini par une apparition d'écarts égaux dans le cadre de la précision de mesure entre la première étape de localisation et la deuxième étape de localisation lors de localisations répétées du même émetteur (E), et **en ce que**, pour déterminer les positions d'illumination (20) dans la deuxième étape de localisation, on applique une correction de position compensant l'écart systématique, afin d'associer la position d'un émetteur (E) déterminée dans la première étape de localisation à une position correspondante de l'émetteur (E) dans la deuxième étape de localisation.

2. Procédé selon la revendication 1, **caractérisé en ce que** la première étape de localisation est effectuée selon un procédé de localisation stochastique.

3. Procédé selon la revendication 1, **caractérisé en ce que** la première étape de localisation est effectuée par balayage de l'échantillon (2) avec la lumière d'illumination (B).

4. Procédé selon la revendication 1, **caractérisé en ce que** la première étape de localisation est effectuée selon un principe MINFLUX.

5. Procédé selon l'une des revendications 1 à 4, **caractérisé en ce que,** lors de la première étape de localisation, l'émetteur (E) est imagé sur un détecteur à résolution spatiale (5), en particulier sur une caméra ou un réseau de détecteurs.

6. Procédé selon l'une des revendications 1 à 5, **caractérisé en ce que** l'écart systématique est causé par des erreurs d'imagerie optique.

7. Procédé selon l'une des revendications 1 à 6, **caractérisé en ce que** la première étape de localisation et la deuxième étape de localisation sont réalisées par des moyens optiques qui diffèrent entre eux par au moins un élément optique.

8. Procédé selon l'une des revendications 1 à 7, **caractérisé en ce que** des valeurs de correction ou des vecteurs de correction (23) dépendant de l'emplacement sont utilisés pour la correction de position, en particulier les valeurs de correction ou les vecteurs de correction (23) présentant une symétrie de rotation par rapport à un axe optique ou une telle symétrie de rotation étant supposée.

9. Procédé selon la revendication 8, **caractérisé en ce que** les première et deuxième étapes de localisation sont exécutées de manière répétée sur différents émetteurs (E) et **en ce que** des valeurs de correction ou des vecteurs de correction (23) initialement adoptés sont mis à jour respectivement après la deuxième étape de localisation en utilisant la différence des positions de l'émetteur (E) déterminées lors de la première étape de localisation et de la deuxième étape de localisation.

10. Procédé selon l'une des revendications 1 à 9, **caractérisé en ce que** l'écart systématique est modélisé par des valeurs de correction ou des vecteurs de correction (23) disposés sur des nœuds (22) d'un réseau de correction (21), en particulier dans lequel la correction de position est calculée par interpolation de plusieurs valeurs de correction ou vecteurs de correction (23) du réseau de correction (21).

11. Procédé selon la revendication 10, **caractérisé en ce qu'**après la deuxième étape de localisation, des valeurs de correction ou des vecteurs de correction (23) du réseau de correction (21) sont mis à jour ou des nœuds supplémentaires (22) avec des valeurs de correction ou des vecteurs de correction (23) sont ajoutés au réseau de correction (21).

12. Procédé selon l'une des revendications 1 à 9, **caractérisé en ce que** l'écart systématique est modélisé par un modèle de compensation paramétré, en particulier par une fonction polynomiale ou par une combinaison linéaire de fonctions orthogonales, en particulier dans lequel la première et la deuxième étape de localisation sont exécutées de manière répétée sur différents émetteurs (E), et dans lequel les paramètres du modèle de compensation sont actualisés à chaque fois après la deuxième étape de localisation.

13. Procédé selon l'une des revendications 1 à 9, **caractérisé en ce que** les valeurs de correction ou vecteurs de correction (23) sont calculés par un algorithme d'apprentissage automatique.

14. Microscope optique (1) pour la localisation d'émetteurs individuels (E) dans un échantillon (2) selon un procédé selon l'une des revendications 1 à 13, comprenant
- une source de lumière (3) pour illuminer l'échantillon (2) avec une lumière d'illumination (B), la lumière d'illumination (B) induisant ou modulant des émissions lumineuses d'émetteurs (E) dans l'échantillon (2),
- des moyens optiques comprenant un dispositif de positionnement de faisceau (6, 7), qui sont conçus pour générer et/ou positionner dans l'échantillon (2) une distribution d'intensité de la lumière d'illumination (B) ou d'une autre lumière d'illumination présentant un minimum local dans au moins une direction spatiale,
- au moins un détecteur (5) conçu pour détecter des émissions de lumière des émetteurs (E),
- une unité de commande et de calcul (10) avec une mémoire (10a) pour des valeurs de correction ou des vecteurs de correction (23), qui est conçue pour, dans une première étape de localisation
i. commander la source de lumière (3) de sorte que la source de lumière (3) illumine un émetteur (E) avec la lumière d'illumination (B), et commander le détecteur (5) de sorte que le détecteur (5) détecte les émissions lumineuses de l'émetteur (E) ;
ii. déterminer la position de l'émetteur (E) dans l'échantillon (2) à partir des émissions lumineuses détectées par le détecteur (5) ;
et qui est en outre conçu pour, dans une deuxième étape de localisation
iii. calculer des positions d'illumination (20) autour de la position de l'émetteur (E) déterminée lors de la première étape de localisation en utilisant des valeurs de correction ou des vecteurs de correction (23) stockés dans la mémoire (10a) pour une correction de position selon l'une des revendications 1 à 13,
iv. commander la source de lumière (3) et/ou les moyens optiques de telle sorte que la source de lumière (3) illumine l'échantillon (2) avec la distribution d'intensité, présentant un minimum local, de la lumière d'illumination (B) ou de l'autre lumière d'illumination aux positions d'illumination (20) ;
v. commander le détecteur (5) ou un autre détecteur de telle sorte que le détecteur (5) ou l'autre détecteur détecte les émissions lumineuses de l'émetteur (E) sur les positions d'illumination (20) ;
vi. calculer une position de l'émetteur (E) dans l'échantillon (2) à partir des émissions lumineuses détectées.

15. Programme informatique comprenant des instructions qui amènent le microscope optique (1) selon la revendication 14 à exécuter le procédé selon l'une des revendications 1 à 13.
